# EUROPÄISCHE PATENTSCHRIFT

(11) **EP 1 495 579 B1**
(45) Veröffentlichungstag und Bekanntmachung des Hinweises auf die Patenterteilung: **13.11.2013**
(21) Anmeldenummer: 03746220.7
(22) Anmeldetag: 31.03.2003
(51) Int. Cl.: H04L 12/40, H04L 12/00, G05B 23/02

(54) **VARIABLE FELDBUSANKOPPLUNG MIT GROSSER KOPPLUNGSL NGE, INSBE SONDERE F R MOBILE BEDIEN- UND BEOBACHTUNGSGER TE**
VARIABLE FIELD BUS COUPLING WITH A LONG COUPLING LENGTH, IN PARTICULAR FOR MOBILE CONTROLLERS AND OBSERVATION DEVICES
COUPLAGE DE BUS DE TERRAIN VARIABLE A GRANDE LONGUEUR DE COUPLAGE, NOTAMMENT POUR APPAREILS DE COMMANDE ET D'OBSERVATION MOBILES

(30) Priorität: 12.04.2002 DE 20205701 U
(43) Veröffentlichungstag der Anmeldung: 12.01.2005
(73) Patentinhaber: Siemens Aktiengesellschaft, 80333 München (DE)
(72) Erfinder: GRUNER, Wolfgang, 90469 Nürnberg (DE); RIEGER, Gottfried, 90766 Fürth (DE)
(86) Internationale Anmeldenummer: PCT/DE2003/001055
(87) Internationale Veröffentlichungsnummer: WO 2003/088567

(56) Entgegenhaltungen:
- EP-A- 0 483 548
- WO-A-02/056545
- DE-A- 19 710 137
- DE-A- 19 960 471

## Beschreibung

Die Erfindung betrifft ein **System zur Ankopplung einer** mobilen Dateneinheit an einen Feldbus, insbesondere von mobilen Handheld- Bediengeräten. Diese können z.B. im industriellen Einsatz zur Steuerung und Bedienung von produktionstechnischen Anlagen eingesetzt werden.

In modernen Anlagen der Industrie, insbesondere automatisierten Fertigungsanlagen, werden mobile Bedien- und Beobachtungssysteme benötigt. Diese sind nicht an einen bestimmten Ort gebunden, sondern können abhängig von aktuellen Notwendigkeiten an wechselnden Einsatzplätzen angesteckt werden. Weiterhin sind bei industriellen Systemen Feldbusse als Standard für vernetzte Computersysteme anzusehen. Es ist somit für Anwender wichtig, mobile Bedien- und Beobachtungsgeräte auf einfache Weise an Feldbusse anschließen zu können.

**Das Dokument** DE 197 10 137 A1 **offenbart eine Vorrichtung der räumlichen Ausdehnung bei Bussystemen.**

**Aufgabe der vorliegenden Erfindung ist es eine Vorrichtung gemäß der** DE 197 10 137 A1 **störfester auszugestalten.**

**Die Aufgabe wird durch ein System gemäß der Merkmalskombination des Anspruchs 1 gelöst.**

Die Erfindung bezieht sich auf eine vorteilhafte Ausgestaltung von sogenannten "Access Points", die als datentechnische Andock-Stellen für die mobilen Bedien- und Beobachtungsgeräte, auch BuB-Systeme genannt, an den einen vernetztes Prozessleitsystem dienen.

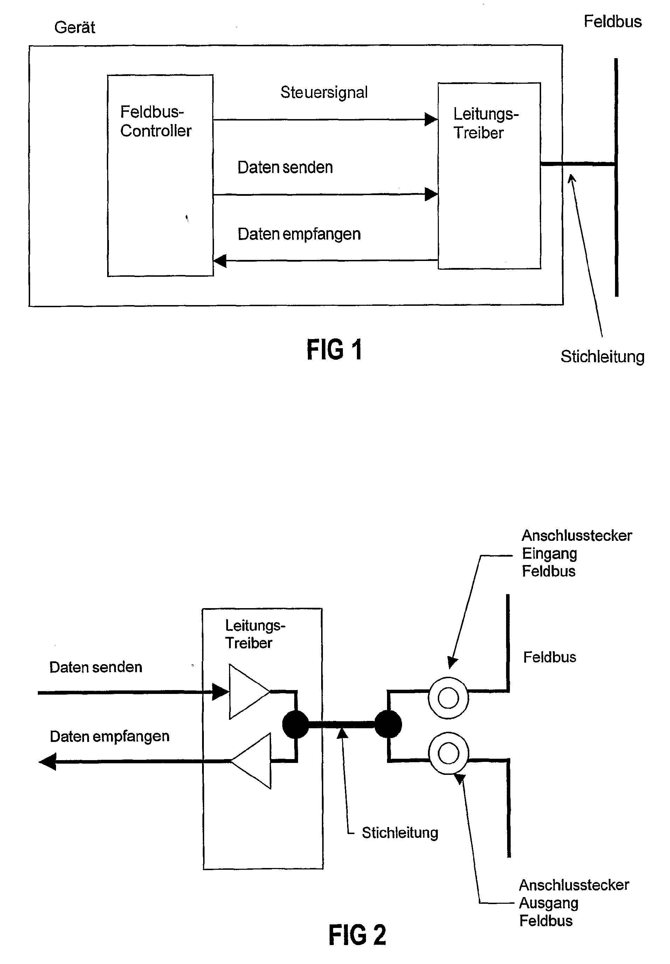

Bei herkömmlichen industriellen Feldbussen müssen bei einer Anschaltung von Geräten an den Feldbus, z.B. von Peripheriegeräten, Bedien- und Beobachtungsgeräten, Zentraleinheiten u.v.m., lange Stichleitungen vermieden werden. In Figur 1 ist ein standardmäßiger Aufbau für einen herkömmlichen Anschluss eines Gerätes an einen Feldbus dargestellt. Dabei ist das Gerät über einen Leitungstreiber und eine Stichleitung an den Feldbus angeschlossen. Die Stichleitung ist in der Länge möglichst kurz zu halten, um die Datenübertragung auf dem Bus nicht zu gefährden. Der Leitungstreiber ist mit einem Feldbus-Controller über drei Signalkabel verbunden. An den Feldbus-Controller sind die Elemente des jeweiligen Geräts angeschlossen. Diese sind au Gründen der Übersichtlichkeit in Figur 1 nicht dargestellt. Dabei sind zum einen ein ankommendes bzw. ein abgehendes Signalkabel zum "Daten empfangen" bzw. zum "Daten senden" vorhanden. Über das ankommende Signalkabel ist auch ein Mithören des Datenverkehrs auf dem Feldbus möglich. Für ein Senden von Daten aus dem Feldbus-Controller über das abgehende Signalkabel ist zusätzliche eine Aktivierung des Leitungstreibers über ein zusätzliches Steuersignal erforderlich.

In Figur 2 ist ein Ausschnitt von Figur 1 im Bereich der Stichleitung nochmals im Detail dargestellt. Dabei sind die beiden Anschlußstecker für den Leitungstreiber am Eingang und am Ausgang des Feldbusses gezeigt. Die Stichleitung zwischen den beiden Anschlußsteckern und dem Leitungstreiber muß möglichst kurz gehalten werden.

Die Erfindung wird am Beispiel von Ausführungsformen näher erläutert. Diese sind in den nachfolgend kurz angeführten Figuren dargestellt. Dabei zeigt
- Figur 1: den Aufbau eines Feldbusanschlusses nach dem Stand der Technik,
- Figur 2: einen Detailausschnitt aus der Figur 1 im Bereich der Stichleitung,
- Figur 3: einen Feldbusanschluß gemäß der Erfindung,
- Figur 4: einen beispielhaften Feldbus, der mit einer Vielzahl von Access Points gemäß der Erfindung ausgerüstet ist,
- Figur 5: eine beispielhafte Gestaltung der Koppelstrecke in Form einer Differenzsignalübertragung,
- Figur 6: eine vorteilhafte Ausführungsform für eine Resent-Erkennung eines an einem Access Point angeschlossenen BuB Geräts.

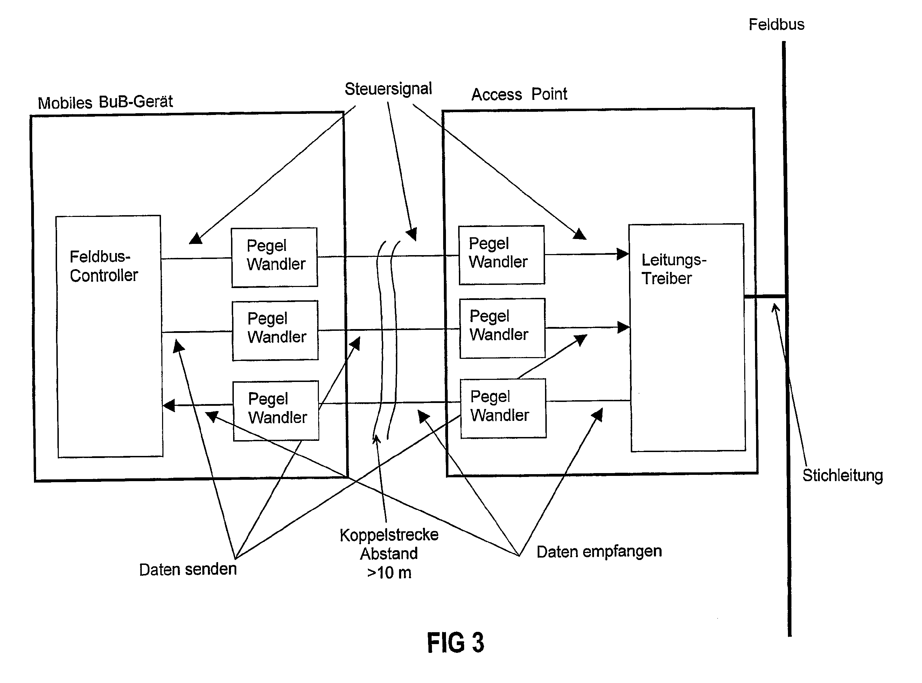

In Figur 3 ist ein Anschluß eines mobilen Gerätes an einen Feldbus gemäß der Erfindung dargestellt. Dabei ist das mobile Bedien- und Beobachtungsgerät über eine Koppelstrecke und einen Access Point an den Feldbus angeschlossen, wobei zwar die Stichleitung zwischen Feldbus und dem im Access Point befindlichen Leitungstreiber eine entsprechend kurze Leitungslänge aufweist. Ein Access Point kann auch als eine Ankopplungseinheit bezeichnet werden. Auf Grund der vorteilhaften Ausgestaltung des mobilen Bedien- und Beobachtungsgeräts einerseits und des Access Point andererseits kann aber die dazwischen liegende Koppelstrecke erheblich größere Leitungslängen aufweisen, die z.B. 10 Meter übersteigen können. Die in Figur 3 dargestellte Ankopplung gemäß der Erfindung kann auch als "Remote-Bus-Access" bezeichnet werden.

Die besonders vorteilhafte Verlängerung der Koppelstrecke wird erfindungsgemäß dadurch erreicht, dass in jeder der drei Signalleitungen für "Steuersignal", "Daten senden" und "Daten empfangen" sowohl auf der Seite des mobilen Bedien- und Beobachtungsgeräts als auch auf der Seite des Access Points jeweils ein Pegel Wandler in die Signalleitung zwischengeschaltet ist. Ein Vom Feldbus Controller im mobilen Bedien- und Beobachtungsgerät abgegebenes Steuersignal wird also von einem ersten Pegel Wandler konvertiert, nach Übertragung über die Signalstrecke einem zweiten Pegel Wandler wieder rückgewandelt und erst dann dem Leitungstreiber im Access Point zugeführt. In der gleichen Weise ist jeweils ein Paar von Pegelwandlern in die zum "Daten senden" und die zum "Daten empfangen" vorgesehene Signalleitung zwischengeschaltet. Auf diese Weise kann das mobile BuB Gerät über eine sehr lange Koppelstrecke an den Feldbus angeschlossen werden, während nur der Access Point über eine entsprechend kurze Stichleitung an den Feldbus angeschlossen ist. In jede der drei Signalleitungen ist somit eine zusätzliche Punkt-zu-Punkt Übertragungsstrecke eingeschaltet, die eine räumliche Entkopplung des mobilen BuB Geräts von dem unmittelbar am Feldbus platzierten Access Piont ermöglicht.

Neben der erheblichen Verlängerungen des Signalleitungswege über die Koppelstrecke weist die erfindungsgemäße Anordnung den weiteren Vorteile auf, das ein BuB-Gerät kann dynamisch an den Access Point angesteckt und wieder abgezogen werden, ohne dass die Datenübertragung auf dem Feldbus dadurch gestört wird. Weiterhin ist es besonders vorteilhaft, dass nahezu beliebig viele Access Points an einem Feldbus verteilt angebracht werden können.

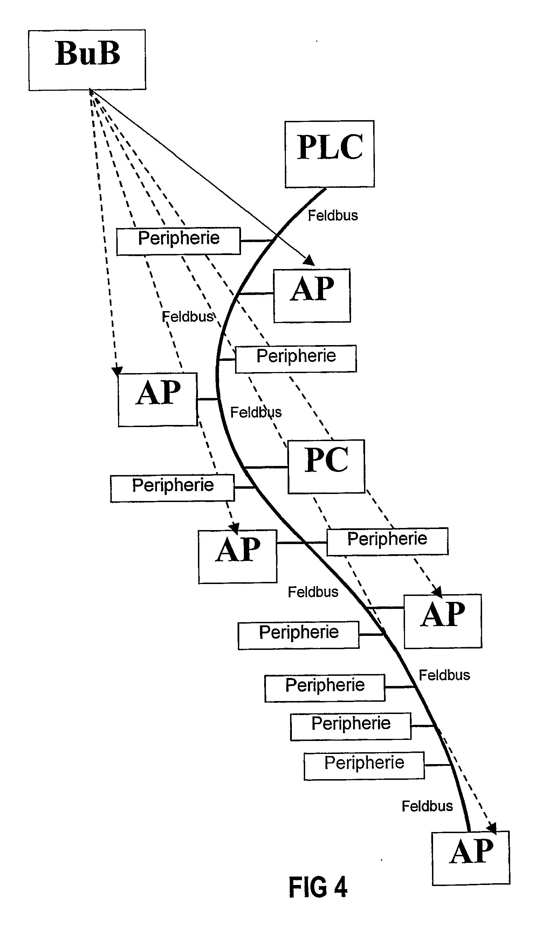

Figur 4 zeigt beispielhaft eine entsprechende Anlagenkonfiguration. Dabei wird ein Feldbus von einer Process Logic Control PLC, d.h. insbesondere einer industriellen Steuerung, gespeist. An den Feldbus sind eine Vielzahl von Peripherie Geräten angeschlossen. Diese weisen Funktionen auf, die in der jeweiligen Einsatzumgebung der dargestellten Anlagenkonfiguration benötigt werden. Vielfach handelt es sich dabei um sogenannte intelligente I/O Module, die den Datentransfer zu einem angeschlossenen Anlagenbetriebsmittel ermöglichen. In Figur 4 sind aus Gründen der besseren Übersicht keine Anlagenbetriebsmittel dargestellt. Weiterhin ist beispielhaft eine zusätzlicher PC an den Feldbus angeschlossen. Dieser kann die Aufgabe eines Steuerrechners übernehmen, um z.B. Diagnosen, Archivierungen und Ankopplungen z.B. an das Internet durchzuführen. An den Feldbus sind verteilt angeordnete und erfindungsgemäß gestaltete Access Points AP angeschlossen. Für einen Anwender besteht nun die Möglichkeit, eine BuB Gerät je nach Bedarf an einen der Access Points anzuschließen. In einer großen industriellen Anlage ist es somit nicht mehr unbedingt erforderlich, stationäre BuB Geräte verteilt zu plazieren, um eine sichere Bedienung und Beobachtung aller Peripheriegeräte und Anlagenbetriebsmittel zu gewährleisten. Vielmehr kann eine BuB Gerät an denjenigen Access Point AP angeschlossen werden, der lokal eine aktuelle zu bedienenden oder zu beobachtenden Betriebsmittel am nächsten liegt.

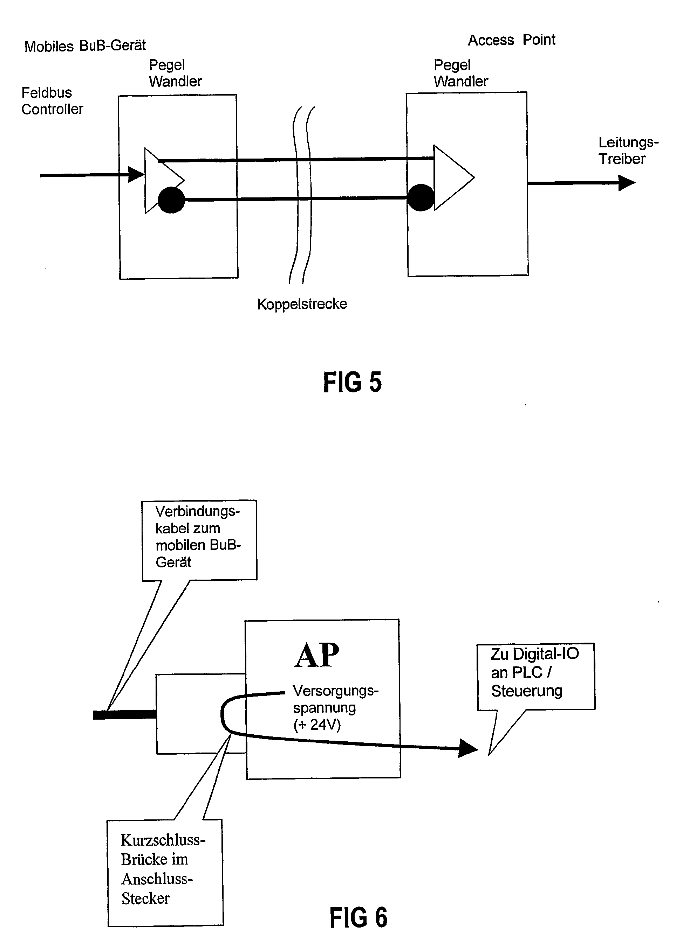

Vorteihaft ist die zwischen zwei Pegelwandlern in einer Signalleitung liegende Koppelstrecke in Form einer differentiellen Übertragungsstrecke ausgelegt. In Figur 5 ist beispielhaft für eine Signalleitung eine solche Differenzsignalübertragungstrecke dargestellt. Diese besteht üblicherweise aus je einem Leitungspaar. In jede Signalleitung ist somit eine Punkt zu Punkt-Verbindung zwischengeschaltet, die eine sehr störsichere Übertragung von Daten auf dem Leitungspaar ermöglicht. Für die Übertragungsgüte ist der Differenzsignalpegel und nicht der absolute Wert der Einzelsignale entscheidend. Überlicherweise gleichen sich auf diese Weise Störungen aus, die auf beiden Leitungen der Koppelstrecke zwischen den Pegelwandlern eingekoppelt werden.

Auf Grund der erfindungsgemäßen Anordnung kann somit ein mobiles BuB-Gerät an verschiedene Access Points AP angeschlossen werden. Vorteilhaft wird über eine sogenannte Present-Erkennung an jedem AP erkannt, wo das mobile BuB-Gerät angeschlossen ist. Eine mögliche Ausführung einer solchen Present Erkennung ist im Beispiel der Figur 6 dargestellt. Hierzu ist jeder Access Point AP über eine zusätzliche Signalleitung mit der übergeordneten PLC verbunden. Diese kann über diese bevorzugt digitale Leitung erkennen, ob ein BuB Gerät an dem Access Point AP angeschlossen ist. Ferner kann dann die PLC über die Present-Erkennung dem jeweils angeschlossenen BuB Gerät auch eine Auswahl von Ansichten übertragen, die dem BuB Gerät an dem jeweiligen Access Point angeboten werden.

## Patentansprüche

1. System zur Ankopplung einer mobilen Dateneinheit (BuB) an einen Feldbus, umfassend
a) eine über eine Stichleitung an den Feldbus angeschlossene Ankoppeleinheit (AP), wobei die Ankoppeleinheit dazu ausgestaltet ist, dass Signale mittels eines Leistungstreibers und eines ersten Pegelwandlers von dem Feldbus empfangen werden bzw. in den Feldbus eingespeist werden,
b) die mobile Dateneinheit (BuB) mit einem Feldbuscontroller und einem zweiten Pegelwandler, welche dazu ausgestaltet sind, die Signale für die mobile Dateneinheit zu empfangen bzw. von dieser in den Feldbus einzuspeisen,
c) eine Koppelstrecke, wobei die Koppelstrecke zwischen der Ankoppeleinheit (AP) und der mobilen Dateneinheit (BuB) zur Übertragung der Signale angeordnet ist,
**dadurch gekennzeichnet, dass** der erste und der zweite Pegelwandler derart ausgestaltet sind, dass die Übertragung eines Signals auf der Koppelstrecke zwischen einem Paar von Pegelwandlern auf dem Prinzip der Differenzsignalübertragung beruht.

2. System nach Anspruch 1, wobei die Koppelstrecke drei Signalleitungen aufweist, wobei sowohl auf der Seite der mobilen Dateneinheit als auch auf der Seite der Ankoppeleinheit jeweils ein Pegelwandler in die Signalleitung zwischengeschaltet ist.

3. System nach Anspruch 2, wobei eine Signalleitung jeweils ein Leitungspaar umfasst.

4. System nach einem der Ansprüche 1 bis 3, wobei die Ankoppeleinheit eine zusätzliche digitale Signalleitung aufweist, welche an eine Process Logic Control-Einheit anschließbar ist.

5. System nach Anspruch 4, wobei die Process Logic Control-Einheit dazu ausgestaltet ist, der an der Ankoppeleinheit angeschlossenen mobilen Dateneinheit eine Auswahl von Ansichten zu übertragen, wobei die mobile Dateneinheit ein mobiles Bedien- und/oder Beobachtungsgerät ist.

## Claims

1. System for connecting a mobile data unit (BuB) to a field bus, including
a) a coupling unit (AP) connected to the field bus via a spur line, wherein the coupling unit is embodied such that signals are received by the field bus by means of a line driver and a first level converter and/or are injected into the field bus,
b) the mobile data unit (BuB) with a field bus controller and a second level converter, which is embodied to receive the signals for the mobile data unit and/or to inject the same herefrom into the field bus,
c) a coupling path, wherein the coupling path is arranged between the coupling unit (AP) and the mobile data unit (BuB) in order to transmit the signals,
**characterised in that** the first and the second level converters are embodied such that the transmission of a signal on the coupling path between a pair of level converters is based on the principle of differential signal transmission.

2. System according to claim 1, wherein the coupling path comprises three signal lines, wherein a level converter is interposed in the signal line both on the side of the mobile data unit and also on the side of the coupling unit respectively.

3. System according to claim 2, wherein a signal line includes a line pair in each instance.

4. System according to one of claims 1 to 3, wherein the coupling unit includes an additional digital signal line, which can be connected to a process logic control unit.

5. System according to claim 4, wherein the process logic control unit is embodied to transmit a selection of views to the mobile data unit connected to the coupling unit, wherein the mobile data unit is a mobile control and observation device.

## Revendications

1. Système de couplage d'une unité ( BuB ) mobile de données à un bus de terrain, comprenant
a ) une unité ( AP ) de couplage, raccordée au bus de terrain par une ligne de branchement, l'unité de couplage étant conformée de manière à ce que des signaux soient reçus par le bus de terrain ou qu'ils soient injectés au moyen d'un dispositif d'excitation de puissance et d'un premier convertisseur de niveau,
b ) l'unité ( BuB ) mobile de données ayant un contrôleur de bus de terrain et un deuxième convertisseur de niveau, qui sont conformés pour recevoir les signaux pour l'unité mobile de données ou les injecter de celle-ci dans le bus de terrain,
c ) une section de couplage, la section de couplage étant disposée entre l'unité ( AP ) de couplage et l'unité ( BuB ) mobile de données pour la transmission des signaux,
**caractérisé en ce que** le premier et le deuxième convertisseurs de niveau sont conformés, de manière à ce que la transmission d'un signal sur la section de couplage entre une paire de convertisseurs de niveau repose sur le principe de la transmission d'un signal de différence.

2. Système suivant la revendication 1, dans lequel la section de couplage a trois lignes de signal, dans lequel respectivement un convertisseur de niveau est monté intermédiairement dans la ligne de signal, tant du côté de l'unité mobile de données qu'également du côté de l'unité de couplage.

3. Système suivant la revendication 2, dans lequel une ligne de signal comprend respectivement une paire de lignes.

4. Système suivant l'une des revendications 1 à 3, dans lequel l'unité de couplage a une ligne de signal numérique supplémentaire, qui peut être raccordée à une unité de contrôle logique de processus.

5. Système suivant la revendication 4, dans lequel l'unité de contrôle logique de processus est conformée pour transmettre à l'unité mobile de données raccordée à l'unité de couplage un choix de vues, l'unité mobile de données étant un appareil mobile de service et/ou d'observation.
